(19) Europäisches Patentamt / European Patent Office / Office européen des brevets

(11) **EP 3 125 276 A1**

(12) **EUROPEAN PATENT APPLICATION**
published in accordance with Art. 153(4) EPC

(43) Date of publication:
01.02.2017 Bulletin 2017/05

(21) Application number: 15769928.1

(22) Date of filing: 11.03.2015

(51) Int Cl.:
*H01L 21/301* (2006.01)   *B32B 7/02* (2006.01)
*B32B 27/32* (2006.01)   *C09J 7/02* (2006.01)
*C09J 201/00* (2006.01)

(86) International application number:
PCT/JP2015/057206

(87) International publication number:
WO 2015/146596 (01.10.2015 Gazette 2015/39)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 28.03.2014 JP 2014069183

(71) Applicant: LINTEC Corporation
Tokyo 173-0001 (JP)

(72) Inventors:
• NAKAMURA, Junichi
Tokyo 173-0001 (JP)
• MIYATAKE, Yusuke
Tokyo 173-0001 (JP)
• TAYA, Naoki
Tokyo 173-0001 (JP)
• KONDO, Takeshi
Tokyo 173-0001 (JP)

(74) Representative: Raynor, Stuart Andrew
J A Kemp
14 South Square
Gray's Inn
London WC1R 5JJ (GB)

(54) **BASE FILM FOR DICING SHEET, DICING SHEET INCLUDING SAID BASE FILM, AND PROCESS FOR PRODUCING SAID BASE FILM**

(57) Base film (2) for a dicing sheet comprises a cutting-fragment suppression layer (A) and an expandable layer (B) laminated on one main surface of the cutting-fragment suppression layer (A). The expandable layer (B) comprises at least one resin-based unit layer. The at least one resin-based unit layer includes a resin-based unit layer (B1) that is disposed nearest to the cutting-fragment suppression layer (A). The resin-based unit layer (B1) comprises a linear polyethylene, polypropylene, and thermoplastic elastomer. The cutting-fragment suppression layer (A) comprises a ring-containing resin (a1) that is a thermoplastic resin having at least one type of an aromatic series-based ring and an aliphatic series-based ring and an acyclic olefin-based resin (a2) that is an olefin-based thermoplastic resin other than the ring-containing resin (a1). The base film (2) for such a dicing sheet is excellent in the expandability and recoverability.

Fig. 1

EP 3 125 276 A1

**Description**

[Technical Field]

The present invention relates to a dicing sheet to which a cut object such as a semiconductor wafer is attached when the cut object is cut and separated into small element pieces, and also relates to a base film used for the dicing sheet and a method of manufacturing the base film.

[Background Art]

Semiconductor wafers such as silicon and gallium arsenide wafers, substrates such as glass and alumina substrates, and various types of packages (these will be collectively referred to as "cut objects" or a "cut object" in the present description) are manufactured in a large diameter state, and these are cut and separated (diced) into small element pieces (referred to as "chips" in the present description).

A cut object to be supplied to the dicing step may be prepared such that, for the purpose of ensuring the handling property of the cut object and chips in the dicing step and subsequent steps, a dicing sheet is preliminarily attached to a surface of the cut object opposite to the side which a cutting tool for cutting comes close to. In such a dicing sheet, a polyolefin-based film, a polyvinyl chloride-based film or the like is typically used as a base film, and a pressure sensitive adhesive layer is provided on the base film.

In the full-cut dicing which is commonly used as a specific method for the dicing step, cutting of a cut object may be performed using a rotating round blade. In this operation, to ensure cutting of the cut object attached thereto with the dicing sheet, not only the cut object but also the pressure sensitive adhesive layer is cut, and a part of the base film may further be cut.

During this operation, cutting fragments of materials that constitute the pressure sensitive adhesive layer and base film are generated from the dicing sheet, and the obtained chips may be contaminated with the cutting fragments. Such cutting fragments may be in a form of filament-like cutting fragments that attach onto a dicing line or to an area near the cut surface of each chip separated by the dicing.

If the chip is enclosed in a package while a large amount of the filament-like cutting fragments as the above remains attached to the chip, the filament-like cutting fragments attached to the chip will be decomposed by heat for the enclosing, and the thermally decomposed substance may destroy the package and/or cause operational failure in a device obtained. Such filament-like cutting fragments are difficult to remove by washing, and the yield of the dicing step will thus be considerably reduced due to the generation of filament-like cutting fragments. Therefore, when the dicing is performed using a dicing sheet, it is required to prevent the generation of filament-like cutting fragments.

When dicing a package as the cut object in which plural chips are enclosed using cured resin, a dicing blade having a thicker blade width is used and the cutting depth in dicing also becomes deeper than the case of dicing a semiconductor wafer. Consequently, the amount of the base film to be cut and removed during the dicing may increase compared with the case of a semiconductor wafer, and this may result in a tendency that the generated amount of filament-like cutting fragments also increases.

To suppress the generation of such cutting fragments, Patent Literature 1 discloses an invention in which a polyolefin-based film irradiated with 1 to 80 Mrad of electron rays or γ (gamma) rays is used as the base film of a dicing sheet. In this invention, it appears that a resin that constitutes the base film is crosslinked through irradiation with the electron rays or γ rays thereby to suppress the generation of cutting fragments.

Patent Literature 1 exemplifies, as materials for the polyolefin-based film to be irradiated with electron rays or γ rays, resins such as polyethylene, polypropylene, polymethylpentene, ethylene-vinyl acetate copolymer, ethylene-(meth)acrylic acid copolymer, ethylene-methyl (meth)acrylic ester copolymer, ethylene-ethyl (meth)acrylic acid copolymer, ethylene-ionomer copolymer, ethylene-vinyl alcohol copolymer, and polybutene.

The "(meth)acrylic acid" as used in the present description means both acrylic acid and methacrylic acid. The same applies to other similar terms.

[Prior Art Literature]

[Patent Literature]

[Patent Literature 1] JP05-211234A

[Summary of the Invention]

[Problems to be solved by the Invention]

However, the irradiation with electron rays or γ rays is performed after the resin as the above is once formed into a film-like shape, which requires an additional production step. Therefore, the production cost tends to be high compared with that for a standard base film.

After the dicing process for dividing the cut object into individual chips to obtain a state in which the plural chips are arranged close to one another on the dicing sheet, an expanding step may be performed for the purpose of separating these chips from one another. In the expanding step, the dicing sheet is applied with tensile force so as to be elongated in a direction or directions on the main surface. To perform the expanding step, the dicing sheet is made to be in a state in which the chips are attached to the central region of the dicing sheet while a ring frame is attached to the outer circumferential region of the dicing sheet. In this state, a ring-like member is made to come into contact with a region between the region to which the chips are attached and the region to which the ring frame is attached, and the relative positions of the ring-like member and the ring frame are varied in the vertical direction. This allows the dicing sheet to be applied with the tensile force. In general, the ring frame may be pulled down with respect to the ring-like member to vary the above relative positions in the vertical direction.

In recent years, the dicing pitch may be reduced in accordance with a reduced size of chips. In this case, to ensure a sufficient space between adjacent chips after the expanding step, the tensile force applied to the dicing sheet tends to be high in the expanding step so as to increase the elongation amount (expanding amount) of the dicing sheet in the main surface. Therefore, dicing sheets for such use are required not to fracture even when applied with higher tensile force than that for conventional ones. With regard to the base film as one of constitutional elements of a dicing sheet, a base film that is less likely to fracture even with an increased expanding amount as the above may be referred to as a "base film excellent in expandability" in the present description. The "dicing pitch" as referred to herein means a distance between center lines of two dicing lines that are parallel and adjacent to each other, among dicing lines formed due to the dicing process. When the dicing process is performed using a rotating dicing blade, the stepwise feeding width for the dicing blade in the direction perpendicular to the direction of rotation of the dicing blade is the dicing pitch.

In addition, an increased expanding amount as the above may cause loosening of the dicing sheet immediately after the expanding work to such an extent that affects the subsequent steps. Specifically, if the loosening amount due to the expanding work (the displacement distance in the vertical direction of the bottom surface of the dicing sheet with reference to the lower side surface of a portion of the dicing sheet which is attached to the ring frame) is unduly large, the loosened bottom surface of the dicing sheet or the vicinity thereof will readily collide with foreign materials during transportation, thus leading to poor handling ability when using the dicing sheet. Therefore, when the loosening amount of the dicing sheet is large, the dicing sheet may be partially heated to allow the thermal shrinkage of the base film that constitutes the dicing sheet, so that the loosening amount of the dicing sheet can be reduced. In the present description, the phenomenon that the loosening amount of the dicing sheet is reduced on the basis of the thermal shrinkage of the base film as the above may be referred to as "recovery," and a base film capable of providing at least one of the property of allowing easy recovery and the property of having a large recovery amount may be referred to as a "base film excellent in recoverability."

An object of the present invention is to provide a base film that is less likely to generate cutting fragments in the dicing step and excellent in the expandability and recoverability even when the expanding amount is large in the expanding step. Another object of the present invention is to provide a dicing sheet that comprises the base film. Still another object of the present invention is to provide a method of manufacturing the base film.

[Means for solving the Problems]

As a result of the present inventors' studies to achieve the above objects, there has been acquired a novel knowledge that a base film excellent in the expandability and recoverability can be obtained according to the features that the base film comprises a cutting-fragment suppression layer (A) and an expandable layer (B) that comprises at least one resin-based unit layer, and a resin-based unit layer (B1) disposed nearest to the cutting-fragment suppression layer (A), among the at least one resin-based unit layer, comprises a linear polyethylene, polypropylene, and thermoplastic elastomer.

The present invention obtained through the knowledge is as follows.

(1) A base film for a dicing sheet, the base film comprising a cutting-fragment suppression layer (A) and an expandable layer (B) laminated on one main surface of the cutting-fragment suppression layer (A), the expandable layer (B) comprising at least one resin-based unit layer, the at least one resin-based unit layer including a resin-based unit layer (B1) that is disposed nearest to the cutting-fragment suppression layer (A), the resin-based unit layer (B1) comprising a linear polyethylene, polypropylene, and thermoplastic elastomer, the cutting-fragment suppression layer (A) comprising a ring-containing resin (a1) that is a thermoplastic resin having at least one type of an aromatic series-based ring and an aliphatic series-based ring and an acyclic olefin-based resin (a2) that is an olefin-based thermoplastic resin other than the ring-containing resin (a1).

(2) The base film as described in the above (1), wherein, when any two layers in all combinations of two adjacent layers among layers that constitute the base film have a tensile elastic modulus E1 and a tensile elastic modulus E2, a tensile elastic modulus ratio obtained from Equation (I) or (II) below is 1.0 to 3.0:

$$\text{tensile elastic modulus ratio } \varepsilon = E1/E2 \text{ when } E1 \geq E2 \ldots (I)$$

$$\text{tensile elastic modulus ratio } \varepsilon = E2/E1 \text{ when } E1 < E2 \ldots (II).$$

(3) The base film as described in the above (1) or (2), wherein the resin-based unit layer (B1) contains 5 mass% or more and 70 mass% or less of the polypropylene.

(4) The base film as described in any one of the above (1) to (3), wherein the resin-based unit layer (B1) contains 1 mass% or more and 60 mass% or less of the thermoplastic elastomer.

(5) The base film as described in any one of the above (1) to (4), wherein the thermoplastic elastomer contained in the resin-based unit layer (B1) is olefin-based elastomer.

(6) The base film as described in any one of the above (1) to (5), wherein the expandable layer (B) has a thickness of which a ratio to a thickness of the base film is 30% or more and 80% or less, and a ratio of a thickness of the resin-based unit layer (B1) to the thickness of the expandable layer (B) is 30% or more.

(7) The base film as described in any one of the above (1) to (6), wherein the resin-based unit layer (B1) contains 10 mass% or more and 90 mass% or less of the linear polyethylene.

(8) The base film as described in any one of the above (1) to (7), wherein the expandable layer (B) comprises a plurality of the resin-based unit layers, wherein the resin-based layers include a resin-based unit layer (B2) that is disposed farthest from the cutting-fragment suppression layer (A) and is different from the resin-based unit layer (B1), wherein the resin-based unit layer (B2) comprises a layer that contains an ethylene-(meth)acrylic acid series copolymer.

(9) A dicing sheet comprising: the base film of any one of the above (1) to (8) ; and a pressure sensitive adhesive layer disposed on the cutting-fragment suppression layer (A) of the base film.

(10) A method of manufacturing the base film of any one of the above (1) to (7), the method comprising a coextrusion molding step of obtaining a laminate of the cutting-fragment suppression layer (A) and the expandable layer (B) by coextrusion molding of two or more types of resin compositions that include a resin composition ($\alpha$) for forming the cutting-fragment suppression layer (A) and a resin composition ($\beta$1) for forming the resin-based unit layer (B1).

(11) A method of manufacturing the base film of the above (8), the method comprising a coextrusion molding step of obtaining a laminate of the cutting-fragment suppression layer (A) and the expandable layer (B) by coextrusion molding of three or more types of resin compositions that include a resin composition ($\alpha$) for forming the cutting-fragment suppression layer (A), a resin composition ($\beta$1) for forming the resin-based unit layer (B1), and a resin composition ($\beta$2) for forming the resin-based unit layer (B2).

[Advantageous Effect of the Invention]

According to the present invention, a base film excellent in the expandability and recoverability is provided. Moreover, according to the present invention, a dicing sheet comprising the above base film is provided. Furthermore, according to the manufacturing method of the present invention, the above base film can be efficiently manufactured.

[Brief Description of Drawing(s)]

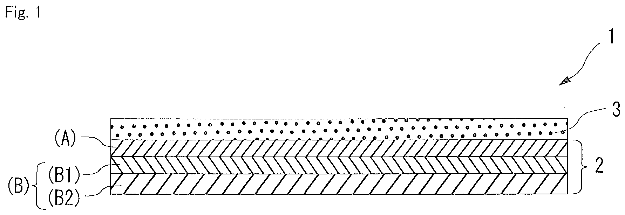

[FIG. 1] FIG. 1 is a cross-sectional view of a dicing sheet according to an embodiment of the present invention.
[Embodiments for Carrying out the Invention]
Description will now be directed to constitutional elements of a dicing sheet according to an embodiment of the present invention, a method of manufacturing the same, etc.

1. Base film

As illustrated in FIG. 1, dicing sheet 1 according to an embodiment of the present invention has a basic structure in which a pressure sensitive adhesive layer 3 is disposed on a base film 2. The base film 2 comprises a cutting-fragment suppression layer (A) and an expandable layer (B) laminated on one main surface of the cutting-fragment suppression layer (A) . As an example of the present embodiment, the expandable layer (B) of the dicing sheet 1 illustrated in FIG. 1 comprises a resin-based unit layer (B1) that is disposed near to the cutting-fragment suppression layer (A) and a resin-based unit layer (B2) that is disposed far from the cutting-fragment suppression layer (A).

The base film 2 may consist of the cutting-fragment suppression layer (A) and the expandable layer (B), or another layer or layers may be laminated thereon or between them. In any case, in the dicing sheet 1 according to an embodiment of the present invention, the pressure sensitive adhesive layer 3 is disposed on a main surface, among two main surfaces of the base film 2, which is located nearer to the cutting-fragment suppression layer (A) than the expandable layer (B).

(1) Cutting-fragment Suppression Layer (A)

The cutting-fragment suppression layer (A) contains a ring-containing resin (a1) that is a thermoplastic resin having at least one type of an aromatic series-based ring and an aliphatic series-based ring and an acyclic olefin-based resin (a2) that is an olefin-based thermoplastic resin other than the ring-containing resin (a1).

The ring-containing resin (a1) and the acyclic olefin-based resin (a2) have different physical characteristics, such as density, tensile elastic modulus, softening point, liquidity temperature, and melt mass flow rate (MFR), based on the difference as to whether or not the polymer that constitutes each resin substantially has a chemical structure comprising a cyclic skeleton (cyclic structure).

The content of the ring-containing resin (a1) in the cutting-fragment suppression layer (A) may preferably be more than 3.0 mass% and 60 mass% or less, more preferably 3.5 mass% or more and 55 mass% or less, particularly preferably 5.0 mass% or more and 55 mass% or less, and further preferably 10 mass% or more and 45 mass% or less. When the content of the ring-containing resin (a1) in the cutting-fragment suppression layer (A) exceeds 3.0 mass%, an effect of suppressing the generation of cutting fragments (which may also be referred to as a "cutting-fragment suppression effect," hereinafter) can be stably obtained. On the other hand, when the content of the ring-containing resin (a1) in the cutting-fragment suppression layer (A) is 60 mass% or less, it is possible to effectively suppress deterioration in the workability of the cutting-fragment suppression layer (A) and the like.

The ring-containing resin (a1) and the acyclic olefin-based resin (a2) will now be described in detail.

(1-1) Ring-containing Resin (a1)

The ring-containing resin (a1) is a thermoplastic resin that has at least one type of an aromatic series-based ring and an aliphatic series-based ring.

The aromatic series-based ring refers to a chemical structure that comprises one or more cyclic skeletons (this chemical structure may be referred to as a "cyclic structure" in the present description) in which at least one of the cyclic skeletons has electrons that satisfy the Hückel's rule and are delocalized in a ring form. Such a cyclic skeleton having electrons delocalized in a ring form will be referred to as an "aromatic ring," hereinafter. Aromatic rings are generally classified into monocyclic rings, such as benzene ring, and condensed rings, such as naphthalene ring. Skeleton atoms that form an aromatic ring may consist only of carbon atoms, or may form a hetero ring in which one or more skeleton atoms are other elements than carbon, such as in pyridine, furan, and thiophene. Further, the aromatic series-based ring according to the present embodiment encompasses a non-benzenoid aromatic ring such as cyclopentadienide anion. The number of atoms that constitute the skeleton of the aromatic series-based ring according to the present embodiment is not restricted, and one or more functional groups such as methyl group and hydroxyl group may be bonded to one or more atoms that constitute the skeleton. In this case, the functional group or groups bonded to an aromatic ring may form a cyclic structure, such as in tetrahydronaphthalene.

The aliphatic series-based ring refers to a cyclic structure in which none of cyclic skeletons has electrons that are delocalized in a ring form as in the aromatic series-based ring. In other words, the aliphatic series-based ring refers to a cyclic structure that comprises one or more cyclic skeletons other than an aromatic ring. Examples of a cyclic skeleton that forms the aliphatic series-based ring include monocyclic ring such as cyclohexane, crosslinked ring such as norbornane and adamantane, condensed ring such as decalin, and spiro ring such as spiro[4,5]decane. A part of bonds that provide the cyclic skeleton of the aliphatic series-based ring may be an unsaturated bond, such as in norbornene, and a part of atoms that form the cyclic skeleton of the aliphatic series-based ring may be other elements than carbon, such as in tetrahydrofuran. The number of skeleton atoms that constitute the aliphatic series-based ring according to the present embodiment is not restricted. One or more hydrogen atoms bonded to atoms that form the cyclic skeleton of the aliphatic series-based ring may be substituted by one or more functional groups such as methyl group and hydroxyl group. The skeleton atoms may also constitute a carbonyl group, such as in cyclohexanone and other cyclic ketones and $\gamma$-butyrolactone and other lactones.

In the thermoplastic resin (which may be referred to as polymer, hereinafter) that constitutes the ring-containing resin (a1), positions of the aromatic series-based ring and aliphatic series-based ring may freely be selected. They may each form a part of the main chain of the polymer that constitutes the ring-containing resin (a1), or may each be bonded to the main chain or a side chain of the polymer, as a functional group (such as phenyl group and adamantyl group) having a cyclic structure. Examples of polymer in which the aromatic series-based ring forms a part of the main chain include polyester, such as polyethylene terephthalate and polybutylene terephthalate, polyimide, polyamideimide, and polyarylketone. Examples of polymer in which the aliphatic series-based ring forms a part of the main chain include cycloolefin polymer, cycloolefin copolymer, norbornene resin using monomer of norbornene, copolymer using monomers of norbornene and ethylene, copolymer using monomers of tetracyclododecene and ethylene, and copolymer using monomers of dicyclopentadiene and ethylene. Examples of the functional group having a cyclic structure also include a group that comprises a set of rings, such as fluorene group and biphenyl group, in addition to the above phenyl group and adamantyl group.

The aromatic series-based ring and the aliphatic series-based ring may be included in one polymer molecule, in which case the form thereof may be such that both form a part of the main chain, or either one or both are bonded as a functional group or functional groups to the main chain or a side chain. Examples of the latter include those in which the portion that forms a part of the main chain is an aliphatic ring, such as in acenaphthylene copolymer, but which have a naphthalene cyclic structure as a functional group.

Preferred structure of the ring-containing resin (a1) may be a structure in which the aliphatic series-based ring including the ring of a crosslinked cyclic skeleton constitutes at least a part of the main chain of polymer that constitutes the resin. Preferred examples of resin that has such a structure include ring-opening metathesis polymer hydrogenated polymer of norbornene-based monomer (specifically, available as ZEONEX (registered trademark) series from ZEON CORPORATION), copolymer of norbornene and ethylene (specifically, available as TOPAS (registered trademark) series from POLYPLASTICS CO., LTD.), copolymer based on ring-opening polymerization of dicyclopentadiene and tetracyclopentadodecene (specifically, available as ZEONOR (registered trademark) series from ZEON CORPORATION), copolymer of ethylene and tetracyclododecene (specifically, available as APEL (registered trademark) series from Mitsui Chemicals, Inc.), and cyclic olefin resin which includes a polar group and of which the raw materials are dicyclopentadiene and methacrylic ester (specifically, available as ARTON (registered trademark) series from JSR Corporation).

It is also preferred that the ring-containing resin (a1) has a structure in which the aromatic series-based ring constitutes at least a part of the main chain of polymer that constitutes the resin. Preferred examples of resin that has such a structure include styrene-butadiene copolymer (specifically, available as ASAFLEX (registered trademark) series from Asahi Kasei Chemicals Corp., CLEAREN (registered trademark) series from DENKI KAGAKU KOGYO KABUSHIKI KAISHA, K-Resin series from Chevron Phillips Chemical Company, Styrolux series from BASF, and Finaclear series from Atofina).

One type of polymer may be used to constitute the ring-containing resin (a1), or plural types of polymers may also be blended for use. In the present description, the types of polymers being different refers to a situation in which they are different to such an extent that the physical characteristics and other properties are significantly affected, such as by a state of branch (i.e. architecture of polymer), molecular weight, compounding balance of monomers that constitute the polymer, compositions of monomers that constitute the polymer, and combination thereof.

The ring-containing resin (a1) may have a crosslinked structure. Any type of crosslinking agent may be used to provide a crosslinked structure, and typical examples thereof include organic peroxide, such as dicumyl peroxide, and a compound that has an epoxy group. The crosslinking agent may crosslink polymer molecules of the same type that constitute the ring-containing resin (a1), or may also crosslink polymer molecules of different types. Bonding site of the crosslinking agent may freely be designed. Crosslinking may be performed with atoms that constitute the main chain of the polymer which constitutes the ring-containing resin (a1), or may also be performed with atoms that constitute those, such as a side chain and a functional group, other than the main chain. The degree of crosslinking may be freely selected, but if the degree of crosslinking excessively progresses, problems may possibly occur, such as that the workability (in particular moldability) of the cutting-fragment suppression layer (A) which includes the ring-containing resin (a1) unduly deteriorates, the surface property of the cutting-fragment suppression layer (A) unduly degrades, and the brittleness resistance of the cutting-fragment suppression layer (A) deteriorates. Therefore, the degree of crosslinking may have to stay within a range in which such problems do not occur.

The ring-containing resin (a1) may be crystalline or non-crystalline. In view of mixing the ring-containing resin (a1) with the acyclic olefin-based resin (a2) and molding them into a film, the ring-containing resin (a1) may preferably be non-crystalline.

(1-2) Acyclic Olefin-based Resin

The acyclic olefin-based resin (a2) comprises an olefin-based thermoplastic resin other than the above ring-containing resin (a1), i.e. an olefin-based thermoplastic resin that does not substantially have any of an aromatic series-based ring and an aliphatic series-based ring. In the present embodiment, as previously described, the olefin-based thermoplastic resin is a collective term of thermoplastic resins that are homopolymers or copolymers of which the monomers are olefin and thermoplastic resins that are copolymers of which the monomers are olefin and other molecules than olefin and in which the mass ratio of a portion based on olefin units in the resin after polymerization is 1.0 mass% or more.

Polymer that constitutes the acyclic olefin-based resin (a2) according to the present embodiment may be in a form of linear chain and may have a side chain. The polymer may also have an acyclic functional group, and the type and substitution density thereof may be freely selected. It may be a functional group, such as alkyl group, which has low reactivity or a functional group, such as carboxylic acid group, which has high reactivity.

It may be preferred that the acyclic olefin-based resin (a2) comprises at least one type of acyclic polyolefin (the "acyclic polyolefin" as used in the present description is a collective term of homopolymers and copolymers of which the monomers are olefin that does not have a cyclic structure). When the acyclic olefin-based resin (a2) comprises acyclic polyolefin, the difference in physical characteristics of the acyclic olefin-based resin (a2) and the ring-containing resin (a1) is more significant, so that the cutting-fragment suppression effect can readily be obtained. The degree of branching in the acyclic polyolefin is not particularly limited.

Specific examples of the acyclic olefin-based resin (a2) include polyethylene (linear low-density polyethylene, low-density polyethylene, medium-density polyethylene, and high-density polyethylene), ethylene-based copolymer such as ethylene-olefin copolymer (copolymer of which the monomers are ethylene and olefin other than ethylene), ethylene-vinyl acetate copolymer, ethylene-(meth)acrylic acid copolymer and ethylene-(meth)acrylic ester copolymer, polypropylene, polybutene, and polymethylpentene.

One type of polymer may be used to constitute the acyclic olefin-based resin (a2), or plural types of polymers may also be blended for use.

The acyclic olefin-based resin (a2) may preferably be polyethylene (linear low-density polyethylene, low-density polyethylene, medium-density polyethylene, or high-density polyethylene) or ethylene-based copolymer such as ethylene-olefin copolymer, ethylene-vinyl acetate copolymer, ethylene-(meth)acrylic acid copolymer and ethylene-(meth)acrylic ester copolymer, and more preferably polyethylene (low-density polyethylene, medium-density polyethylene, or high-density polyethylene) or ethylene-olefin copolymer.

Examples of olefin that constitutes the ethylene-olefin copolymer include propylene, 1-butene, 1-hexene, 1-octene, 4-methyl-1-pentene, and $\alpha$-olefin monomers of which the carbon number is 4 or more and 18 or less.

When the above acyclic olefin-based resin (a2) is ethylene-olefin copolymer, the mass ratio of a portion based on ethylene units in the resin after polymerization may be 1.0 mass% or more. When the mass ratio of the portion based on ethylene units is within the above range, the cutting-fragment suppression effect can be stably obtained.

In view of making large the difference in physical characteristics between those of the acyclic olefin-based resin (a2) and the ring-containing resin (a1) to stably obtain the cutting-fragment suppression effect, the above mass ratio of the portion based on ethylene units in the resin after polymerization may preferably be 20 mass% or more, more preferably 50 mass% or more, and further preferably 70 mass% or more.

The acyclic olefin-based resin (a2) may have a crosslinked structure. Any type of crosslinking agent may be used to provide a crosslinked structure, and typical examples thereof include organic peroxide, such as dicumyl peroxide, and a compound that has an epoxy group. The crosslinking agent may crosslink polymer molecules of one type that constitute the acyclic olefin-based resin (a2), or may also crosslink polymer molecules of different types. Bonding site of the crosslinking agent may freely be designed. The crosslinking agent may be crosslinked with atoms that constitute the main chain of the polymer which constitutes the acyclic olefin-based resin (a2), or may also be crosslinked with atoms that constitute those, such as a side chain and a functional group, other than the main chain. The degree of crosslinking may also be freely selected, but if the degree of crosslinking excessively progresses, the difference in physical characteristics between those of the acyclic olefin-based resin (a2) and the ring-containing resin (a1) will possibly be reduced, so that the function of suppressing the occurrence of cutting fragments may tend to deteriorate. Therefore, the degree of crosslinking may have to stay within a range in which such problems do not occur.

A preferred degree of the thermoplasticity of the acyclic olefin-based resin (a2) according to the present embodiment, when described as a range of the melt mass flow rate (190°C, 2.16 kgf), may be 0.5 g/10 min or more and 10 g/10 min or less and more preferably 2.0 g/10 min or more and 7 g/10 min or less. In view of achieving an enhanced phase separation structure in the cutting-fragment suppression layer (A), it may be preferred that the melt mass flow rate of the acyclic olefin-based resin (a2) is comparable with or more than that of the ring-containing resin (a1).

The acyclic olefin-based resin (a2) may be crystalline or non-crystalline.

(1-3) Other Components of Cutting-fragment Suppression Layer (A)

The cutting-fragment suppression layer (A) may contain other components in addition to the above ring-containing resin (a1) and acyclic olefin-based resin (a2). Examples of such other components include thermoplastic elastomer resins, such as isoprene rubber, nitrile rubber, acrylic rubber, urethane rubber, butadiene rubber, and copolymers thereof. The content of these other components in the cutting-fragment suppression layer (A) may preferably be set within a range in which the cutting-fragment suppression effect can be obtained in the cutting-fragment suppression layer (A).

(2) Expandable Layer (B)

The expandable layer (B) comprises at least one resin-based unit layer. That is, the expandable layer (B) may have a single layer structure or a laminate structure. The expandable layer (B) comprises a resin-based unit layer (B1) as a unit layer, among one or more resin-based unit layers included in the expandable layer (B), which is disposed nearest to the cutting-fragment suppression layer (A). When the expandable layer (B) has a single layer structure, the expandable layer (B) is composed of the resin-based unit layer (B1).

(2-1) Resin-based Unit layer (B1)

The resin-based unit layer (B1), which is disposed nearest to the cutting-fragment suppression layer (A), contains a linear polyethylene, polypropylene, and thermoplastic elastomer.
In the present description, the "linear polyethylene" refers to a copolymer of ethylene and $\alpha$-olefin (alkene which has an ethylenic unsaturated bond at the $\alpha$-site and of which the carbon number is 4 or more). Specific structure of the linear polyethylene is not particularly limited. Examples of $\alpha$-olefin as the monomer that provides the linear polyethylene include 1-butene, 1-hexene, and 1-octene. The linear polyethylene may be composed of one type of polymer, or may also be a mixture of plural types of polymers.
According to the feature that the resin-based unit layer (B1) contains a linear polyethylene, a base film 2 excellent in the expandability and recoverability can be obtained. In view of more stably obtaining the base film 2 excellent in the expandability and recoverability, the resin-based unit layer (B1) may preferably contain 10 mass% or more, more preferably 15 mass% or more, and particularly preferably 20 mass% or more, of the linear polyethylene. The content of the linear polyethylene in the resin-based unit layer (B1) may be further high, specifically, may be 30 mass% or more in an embodiment, 40 mass% or more in another embodiment, and 50 mass% or more in still another embodiment. The upper limit of the content of the linear polyethylene in the resin-based unit layer (B1) may be within a range in which the content of other components (such as polypropylene and thermoplastic elastomer) contained in the resin-based unit layer (B1) does not unduly decrease. The content of the linear polyethylene in the resin-based unit layer (B1) may be 90 mass% or less in an embodiment, 80 mass% or less in another embodiment, and 70 mass% or less in still another embodiment.
The density at 23°C of the linear polyethylene (unless otherwise stated in the present description, the "density" means the density at 23°C) is not particularly limited. In view of more stably obtaining a base film 2 excellent in the expandability and recoverability, etc., the density of the linear polyethylene may preferably be 860 kg/m$^3$ or more and less than 940 kg/m$^3$, more preferably 870 kg/m$^3$ or more and less than 935 kg/m$^3$, further preferably 890 kg/m$^3$ or more and less than 930 kg/m$^3$, and particularly preferably 910 kg/m$^3$ or more and less than 930 kg/m$^3$.
Degree of thermoplasticity of the linear polyethylene is not particularly limited. A preferred degree of the thermoplasticity, when described as a range of the melt mass flow rate (measurement condition: temperature of 190°C and load of 2.16 kgf, here and hereinafter), may be 0.5 g/10 min or more and 10 g/10 min or less and more preferably 2.0 g/10 min or more and 7 g/10 min or less.
In the present description, the "polypropylene" is a corrective term of homopolymer and copolymer of monomers that include propylene. Polypropylene may be composed of one type of polymer or may also be a mixture of plural types of polymers. According to the feature that the resin-based unit layer (B1) contains polyethylene, a base film 2 excellent in the expandability and recoverability can be obtained.
When the polypropylene contains copolymer, the type of monomer other than propylene in association with the copolymer is not limited. Examples of such monomer include ethylene and $\alpha$-olefin of which the carbon number is 4 to 18, such as 1-butene, 1-hexene, and 1-octene.
When the polypropylene contains copolymer, the content ratio of constitutional units originated from propylene in the copolymer may ordinarily be 75 mass% or more and 99.9 mass% or less, preferably 80 mass% or more and 99 mass% or less, more preferably 85 mass% or more and 99 mass% or less, and further preferably 90 mass% or more and 99 mass% or less, as a mass ratio of propylene to the monomers as a whole for forming the copolymer.
When the polypropylene contains copolymer, the specific form of the copolymer is not particularly limited and may be any of random copolymer, block copolymer, and graft copolymer. The polypropylene may contain two or more types of copolymers of the above.

In view of more stably obtaining a base film 2 excellent in the expandability and recoverability, the resin-based unit layer (B1) may preferably contain 5 mass% or more, more preferably 10 mass% or more, and particularly preferably 12 mass% or more, of the polypropylene. The content of polypropylene in the resin-based unit layer (B1) may be further high, specifically, may be 15 mass% or more in an embodiment and 30 mass% or more in another embodiment. The upper limit of the content of polypropylene in the resin-based unit layer (B1) may be within a range in which the content of other components (such as linear polyethylene and thermoplastic elastomer) contained in the resin-based unit layer (B1) does not unduly decrease. The content of polypropylene in the resin-based unit layer (B1) may be 70 mass% or less in an embodiment, 60 mass% or less in another embodiment, and 50 mass% or less in still another embodiment.

The polypropylene may preferably be a thermoplastic resin in view of easy production of the expandable layer (B) and the like. In this case, the polypropylene may not be crosslinked or may be in a state in which the degree of crosslinking is appropriately controlled. When the polypropylene is a thermoplastic resin, the melt mass flow rate (MFR) may preferably be 0.5 g/10 min or more and 10 g/10 min or less and more preferably 2.0 g/10 min or more and 7 g/10 min or less.

In the present description, the "thermoplastic elastomer" refers to a high-molecular material that still remains thermoplastic when being repeatedly heated and cooled within a temperature range specific to the material during the work and use and has rubber-like elasticity at ordinary temperatures. Here, the rubber-like elasticity represents a tendency of a material that, when the material is deformed more than a little by a weak stress and the stress is then removed, the material tends to rapidly recover its original size and shape. This tendency may be mainly caused by the decrease in entropy due to the deformation. According to the feature that the resin-based unit layer (B1) contains the thermoplastic elastomer, a base film 2 excellent in the expandability and recoverability can be obtained.

Specific physical characteristics of the thermoplastic elastomer are as follows. That is, when the external force is removed, the original size may be almost instantaneously recovered. The tensile elastic modulus may be about 0.1 MPa to about 100 MPa. The elongation at the time of fracture may be about 100% to about 800%. The tensile strength may be about 5 MPa to about 40 MPa. Specific type of the thermoplastic elastomer is not limited, provided that it has such physical characteristics. Examples of the thermoplastic elastomer include olefin-based elastomer, styrene-based elastomer, and urethane-based elastomer.

Examples of the olefin-based elastomer include: copolymer of propylene and $\alpha$-olefin; $\alpha$-olefin polymer (polymer which may be any of homopolymer and copolymer obtained by polymerizing $\alpha$-olefin) ; ethylene-propylene-based rubber, such as ethylene-propylene rubber (EPM) and ethylene-propylene-diene rubber (EPDM); and chlorosulfonated polyethylene (CSM). As the $\alpha$-olefin polymer among the above, there may be mentioned the commercially available products in the industrial field, such as TAFMER (registered trademark) series available from Mitsui Chemicals, Inc., AFFINITY (registered trademark) series and ENGAGE (registered trademark) series available from The DOW Chemical Company, EXACT (registered trademark) series available from Exxon Mobil Corporation, and EXCELLEN (registered trademark) FX series available from Sumitomo Chemical Company, Limited.

The styrene-based elastomer may comprise a copolymer that contains a constitutional unit originated from styrene or its derivative (styrene-based compound). The styrene-based elastomer may have rubber-like elasticity within a temperature region including ordinary temperatures and also have thermoplasticity. Examples of the styrene-based elastomer include a styrene-conjugate diene copolymer and a styrene-olefin copolymer. Specific examples of the styrene-conjugate diene copolymer include: non-hydrogenated styrene-conjugate diene copolymers, such as styrene-butadiene copolymer, styrene-butadiene-styrene copolymer (SBS), styrene-butadiene-butylene-styrene copolymer, styrene-isoprene copolymer, styrene-isoprene-styrene copolymer (SIS) and styrene-ethylene-isoprene-styrene copolymer; and hydrogenated styrene-conjugate diene copolymers, such as styrene-ethylene/propylene-styrene copolymer (SEPS, hydrogenated product of styrene-isoprene-styrene copolymer) and styrene-ethylene-butylene-styrene copolymer (SEBS, hydrogenated product of styrene-butadiene copolymer). Examples of the commercially available products in the industrial field include Tufprene (registered trademark) available from Asahi Kasei Corp. , Kraton (registered trademark) available from Kraton Polymer Japan, Sumitomo TPE-SB available from Sumitomo Chemical Company, Limited, Epofriend (registered trademark) available from Daicel Corporation, Rabalon (registered trademark) available from Mitsubishi Chemical Corporation, Septon (registered trademark) available from KURARAY CO., LTD., and Tuftec (registered trademark) available from Asahi Kasei Corp.

The thermoplastic elastomer may be composed of one type of polymer or may also be a mixture of plural types of polymers.

Among these thermoplastic elastomers, the olefin-based elastomer may be preferred in view of enhancing the compatibility into other components contained in the resin-based unit layer (B1), in particular into the linear polyethylene and polypropylene.

In view of more stably obtaining a base film 2 excellent in the expandability and recoverability, the resin-based unit layer (B1) may preferably contain 1 mass% or more, more preferably 2 mass% or more, and particularly preferably 5 mass% or more, of the thermoplastic elastomer. The upper limit of the content of thermoplastic elastomer in the resin-based unit layer (B1) may be within a range in which the content of other components (such as linear polyethylene and polypropylene) contained in the resin-based unit layer (B1) does not unduly decrease. The content of thermoplastic elastomer in the resin-based unit layer (B1) may be 60 mass% or less in an embodiment, 50 mass% or less in another embodiment, and 40 mass% or less in still another embodiment.

The resin-based unit layer (B1) may contain a resin other than the above resins (such a resin may be referred to as a "secondary resin" in the present description). Examples of the secondary resin include low-density polyethylene (LDPE, density: 910 kg/m$^3$ or more and less than 930 kg/m$^3$), very-low-density polyethylene (VLDPE, density: 880 kg/m$^3$ or more and less than 910 kg/m$^3$), ethylene-propylene copolymer, ethylene-vinyl acetate copolymer (EVA), ethylene-vinyl acetate-maleic anhydride copolymer, ethylene-(meth)acrylic acid copolymer, ethylene-(meth) acrylic ester copolymer such as ethylene-butyl acrylate (EBA), and ethylene-(meth)acrylic ester-maleic anhydride copolymer. When the resin-based unit layer (B1) contains a secondary resin, the secondary resin may be composed of one type of resin or may also be composed of plural types of resins.

The fracture elongation of the resin-based unit layer (B1) is not limited, but may preferably be large. The fracture elongation may preferably be 100% or more, more preferably 200% or more, and particularly preferably 500% or more. The fracture elongation of the resin-based unit layer (B1) may be anisotropic due to the manufacturing process.

The thickness of the resin-based unit layer (B1) is not particularly limited. However, if the resin-based unit layer (B1) is unduly thin, the meaning of providing the resin-based unit layer (B1) may possibly be lost, while if the resin-based unit layer (B1) is unduly thick, the meaning of providing a resin-based unit layer (B2), which will be described later, may possibly be lost. Therefore, the thickness of the resin-based unit layer (B1) may be appropriately set in consideration of the above. In general, the thickness of the resin-based unit layer (B1) may preferably be 5 μm or more and 150 μm or less, more preferably 10 μm or more and 100 μm or less, and particularly preferably 15 μm or more and 60 μm or less.

The ratio of the thickness of the resin-based unit layer (B1) to the thickness of the expandable layer (B) is also not particularly limited. When the expandable layer (B) consists of the resin-based unit layer (B1), the ratio is 100%. When the expandable layer (B) is composed of a plurality of unit layers, the ratio may preferably be 5% or more and 70% or less, more preferably 10% or more and 60% or less, and particularly preferably 20% or more and 50% or less.

(2-2) Resin-based Unit layer (B2)

When the expandable layer (B) is composed of a plurality of unit layers, the expandable layer (B) may preferably include a resin-based unit layer (B2) that contains an ethylene-(meth)acrylic acid series copolymer. As for the arrangement of the resin-based unit layer (B2) in the expandable layer (B), the resin-based unit layer (B2) may be disposed farther from the cutting-fragment suppression layer (A) than the resin-based unit layer (B1), and may preferably be disposed farthest from the cutting-fragment suppression layer (A). In the present description, the "ethylene-(meth)acrylic acid series copolymer" refers to a copolymer of ethylene and one or more types of compounds selected from the group consisting of (meth)acrylic acid and (meth)acrylic ester. Examples of the (meth)acrylic ester include methyl (meth)acrylate, ethyl (meth)acrylate, hydroxyethyl (meth)acrylate, and butyl (meth)acrylate. According to the feature that the expandable layer (B) includes such a resin-based unit layer (B2), a base film 2 more excellent in the recoverability can be readily obtained.

The molar ratio of constituent units originated from ethylene to the entire constituent units possessed by the ethylene-(meth)acrylic acid series copolymer may preferably be 89% or more, more preferably 90% or more, and particularly preferably 91% or more. The ethylene-(meth)acrylic acid series copolymer contained in the resin-based unit layer (B2) may be composed of one type of polymer or may also be composed of plural types of polymers.

The content of the ethylene-(meth)acrylic acid series copolymer contained in the resin-based unit layer (B2) may preferably be 50 mass% or more, more preferably 70 mass% or more, and particularly preferably 90 mass% or more, to the total resins that constitute the resin-based unit layer (B2). The resin-based unit layer (B2) may consist of ethylene-(meth)acrylic acid series copolymer.

The resin-based unit layer (B2) may contain an ethylene-based resin (b1) other than the ethylene-(meth)acrylic acid series copolymer. In the present description, the "ethylene-based resin (b1)" refers to a thermoplastic resin of which the primary component is polymer that contains constituent units originated from ethylene. The molar ratio of constituent units originated from ethylene to the entire constituent units possessed by the ethylene-based resin (b1) may preferably be 60 % or more and 100 % or less and more preferably 70 % or more and 99.5 % or less.

Examples of the ethylene-based resin (b1) include low-density polyethylene (LDPE, density: 910 kg/m$^3$ or more and less than 930 kg/m$^3$), very-low-density polyethylene (VLDPE, density: 880 kg/m$^3$ or more and less than 910 kg/m$^3$), ethylene-propylene copolymer, ethylene-vinyl acetate copolymer (EVA), and ethylene-vinyl acetate-maleic anhydride copolymer. The ethylene-based resin (b1) may be composed of one type of resin or may also be composed of plural types of resins.

The resin-based unit layer (B2) may contain a resin other than the ethylene-(meth)acrylic acid series copolymer and the ethylene-based resin (b1). Examples of such a resin include polypropylene and styrene-based elastomer.

The thickness of the resin-based unit layer (B2) is not particularly limited. If the resin-based unit layer (B2) is unduly thin, the meaning of providing the resin-based unit layer (B2) may be lost because the resin-based unit layer (B1) dominates the physical characteristics of the expandable layer (B) as a whole. If the resin-based unit layer (B2) is unduly thick, the thickness of the resin-based unit layer (B1) is relatively too thin, so that the meaning of providing the resin-based unit layer (B1) may be lost. Therefore, the thickness of the resin-based unit layer (B2) may be appropriately set in consideration of the above. In general, the thickness of the resin-based unit layer (B2) may preferably be 15 μm or more and 200 μm or less, more preferably 25 μm or more and 150 μm or less, and particularly preferably 35 μm or more and 100 μm or less. The ratio of the thickness of the resin-based unit layer (B2) to the thickness of the expandable layer (B) is also not particularly limited. In general, the ratio may preferably be 30% or more and 95% or less, more preferably 40% or more and 90% or less, and particularly preferably 50% or more and 80% or less.

(2-3) Other Features of Expandable Layer (B), etc.

The expandable layer (B) may consist of the above resin-based unit layer (B1) or may also consist of the resin-based unit layer (B1) and the resin-based unit layer (B2). Provided that the expandable layer (B) can achieve a predetermined function, the expandable layer (B) may further comprise one or more unit layers other than the resin-based unit layer (B1) and the resin-based unit layer (B2).

(3) Other Features of Base Film 2

The thickness of the base film 2 according to the present embodiment may ordinarily be 40 μm or more and 300 μm or less and preferably 60 μm or more and 200 μm or less. The thickness of the cutting-fragment suppression layer (A) may ordinarily be 20 μm or more and 120 μm or less and preferably 30 μm or more and 100 μm or less. When the cutting-fragment suppression layer (A) has a thickness as the above, the cutting-fragment suppression effect can be more stably obtained. The thickness of the expandable layer (B) may ordinarily be 20 μm or more and 280 μm or less and preferably 40 μm or more and 200 μm or less. If the expandable layer (B) is unduly thin, a base film 2 excellent in the expandability may not be obtained even when the expandable layer (B) has the above compositional features.
It may be preferred that the ratio of the thickness of the expandable layer (B) to the thickness of the base film 2 is 30% or more and 80% or less. Unduly low value of the ratio causes the expandable layer (B) to be excessively thin, and a base film 2 excellent in the expandability may not be readily obtained as the above. On the other hand, unduly high value of the above ratio causes the cutting-fragment suppression layer (A) to be excessively thin, and the cutting-fragment suppression effect may not be stably obtained. The ratio of the thickness of the expandable layer (B) to the thickness of the base film 2 may be further preferably 33% or more and 77% or less, more preferably 35% or more and 75% or less, and particularly preferably 40% or more and 70% or less.
It may also be preferred that the tensile elastic modulus of the base film 2 according to the present embodiment is 80 MPa or more and 300 MPa or less. If the tensile elastic modulus is less than 80 MPa, such a soft base film 2 may come loose when a wafer is attached to the dicing sheet 1 and they are then fixed to a ring frame, and the loosening may cause the transportation error. If, on the other hand, the tensile elastic modulus of the base film 2 exceeds 300 MPa, problems may possibly occur, such as that the dicing sheet 1 itself is detached from the ring frame because the load applied during the expanding step is large.
As for the layers that constitute the base film 2 according to the present embodiment, it may be preferred that the difference between the tensile elastic moduli of two adjacent layers is small. That is, when any two layers in all combinations of two adjacent layers among layers that constitute the base film 2 have a tensile elastic modulus E1 and a tensile elastic modulus E2, a tensile elastic modulus ratio obtained from Equation (I) or (II) below may preferably be 1.0 to 3.0, particularly preferably 1.0 to 2.8, and further preferably 1.0 to 2.6:

$$\text{tensile elastic modulus ratio } \varepsilon = E1/E2 \text{ when } E1 \geq E2 \dots \text{(I)}$$

$$\text{tensile elastic modulus ratio } \varepsilon = E2/E1 \text{ when } E1 < E2 \dots \text{(II)}.$$

For example, when the expandable layer (B) consists only of the resin-based unit layer (B1) in the base film 2 according to the present embodiment, i. e. , when the base film 2 is composed of the cutting-fragment suppression layer (A) and the resin-based unit layer (B1), the tensile elastic modulus ratio ε, which is calculated from the above Equation (I) or (II) using the values of the tensile elastic moduli measured for the cutting-fragment suppression layer (A) and the resin-based unit layer (B1), may preferably be 1.0 to 3.0.
When the expandable layer (B) comprises the resin-based unit layer (B1) and the resin-based unit layer (B2) in the base film 2 according to the present embodiment, i.e. , when the base film 2 is composed of the cutting-fragment suppression layer (A), the resin-based unit layer (B1), and the resin-based unit layer (B2), the tensile elastic modulus ratio ε, which is calculated from the above Equation (I) or (II) using the values of the tensile elastic moduli measured for the cutting-fragment suppression layer (A) and the resin-based unit layer (B1), may preferably be 1.0 to 3.0. Further, the tensile elastic modulus ratio ε, which is calculated from the above Equation (I) or (II) using the values of the tensile elastic moduli measured for the resin-based unit layer (B1) and the resin-based unit layer (B2), may preferably be 1.0 to 3.0. The method of measuring the tensile elastic modulus of each layer that constitutes the base film 2 is as described in the exemplary test, which will be described later.

According to the feature that the above tensile elastic modulus is 3.0 or less, fracture of the dicing sheet 1 during the expanding can be effectively prevented even when the dicing is performed at a faster moving speed of a blade and/or when the dicing is performed at a deeper cutting depth.

(4) Method of Manufacturing Base Film 2

Method of manufacturing the base film 2 is not particularly limited. Examples thereof include: melt extrusion method, such as T-die method and round-die method; calender method; and solution method, such as dry method and wet method, and any method may be employed. In view of manufacturing the base film 2 at high productivity, it may be preferred to employ the melt extrusion method or the calender method. When, among them, the melt extrusion method is employed for manufacturing, components that constitute the cutting-fragment suppression layer (A) and components that constitute the expandable layer (B) may be separately kneaded, and film forming may be performed using a known extruder directly from the obtained kneaded components or from pellets which are produced from the obtained kneaded components.

2. Other Constitutional Elements of Dicing Sheet

Examples of other constitutional elements than the base film 2 of the dicing sheet 1 include: a pressure sensitive adhesive layer 3 that is disposed on a main surface, among two main surfaces of the base film 2, which is located nearer to the cutting-fragment suppression layer (A) than the expandable layer (B); and a release sheet for protecting the surface of the pressure sensitive adhesive layer 3 opposite to the side facing the base film 2, i.e. the surface for being attached to a cut object.

(1) Pressure Sensitive Adhesive Layer 3

Examples of pressure sensitive adhesive that is used to constitute the pressure sensitive adhesive layer 3 include, but are not particularly limited to, those which are usually used for dicing sheets, such as rubber-based, acrylic-based, silicone-based and polyvinyl ether-based pressure sensitive adhesives, and which may be energy ray curable-type (including ultraviolet curable-type), heat foamable-type or heat curable-type pressure sensitive adhesive. When the dicing sheet 1 according to the present embodiment is used as a dicing/die-bonding sheet, adhesives may be used, such as pressure sensitive adhesive, thermoplastic adhesive and B-stage adhesive, which have both the wafer fixing function and the die adhesion function.

The thickness of the pressure sensitive adhesive layer 3 may ordinarily be 3 μm to 100 μm and preferably about 5 μm to 80 μm.

(2) Release Sheet

The release sheet for protecting the pressure sensitive adhesive layer 3 may be freely selected.

Examples of the release sheet to be used include polyethylene film, polypropylene film, polybutene film, polybutadiene film, polymethylpentene film, polyvinyl chloride film, vinyl chloride copolymer film, polyethylene terephthalate film, polyethylene naphthalate film, polybutylene terephthalate film, polyurethane film, ethylene-vinyl acetate film, ionomer resin film, ethylene-(meth)acrylic acid copolymer film, ethylene-(meth)acrylic ester copolymer film, polystyrene film, polycarbonate film, polyimide film, and fluorine resin film. Crosslinked films thereof may also be used. Laminate film obtained by laminating a plurality of such films may also be used.

It may be preferred that the release surface (in particular the surface to be in contact with the pressure sensitive adhesive layer 3) of the above release sheet is subjected to release treatment. Examples of release agent to be used for the release treatment include alkyd-based, silicone-based, fluorine-based, unsaturated polyester-based, polyolefin-based and wax-based release agents.

The thickness of the release sheet is not particularly limited and may ordinarily be about 20 μm to 150 μm.

3. Method of Manufacturing Dicing Sheet 1

Method of manufacturing the dicing sheet 1 comprising a laminate of the above base film 2 and pressure sensitive adhesive layer 3 and other layers, such as release sheet, which may be used as necessary, is not particularly limited.

Some exemplary methods of manufacturing the dicing sheet 1 may be as follows.

(i) The base film 2 is formed and the pressure sensitive adhesive layer 3 is formed thereon, and if necessary a release sheet is further laminated thereon. In this operation, the method of forming the pressure sensitive adhesive layer 3 may be freely selected.

One exemplary method of forming the pressure sensitive adhesive layer 3 may be as follows. A coating agent is prepared which contains a pressure sensitive adhesive composition for forming the pressure sensitive adhesive layer 3 and if necessary further contains some solvent. The main surface, among two main surfaces of the base film 2, which is located nearer to the cutting-fragment suppression layer (A) than the expandable layer (B), is coated with the coating agent using a coater, such as a roll coater, knife coater, knife-over-roll coater, air knife coater, die coater, bar coater, gravure coater and curtain coater. The layer of the coating agent on the base film 2 is dried to form the pressure sensitive adhesive layer 3.

In an exemplary method other than the above method, a pressure sensitive adhesive layer 3 separately formed in a sheet-like form may be attached to the base film 2.

(ii) The pressure sensitive adhesive layer 3 is formed on the release sheet, and the base film 2 is laminated on the pressure sensitive adhesive layer 3 by applying pressure. In this operation, the method of forming the pressure sensitive adhesive layer 3 may be freely selected as the above.

In an exemplary method other than the above methods of (i) and (ii), a pressure sensitive adhesive layer 3 separately formed in a sheet-like form may be applied to the base film 2.

4. Method of Manufacturing Chips

A method of manufacturing chips using the dicing sheet according to the present embodiment will be described.

First, the surface of the pressure sensitive adhesive layer 3 of the dicing sheet 1 according to the present embodiment is attached to one main surface of a cut object. When the surface of the pressure sensitive adhesive layer 3 is protected by a release sheet, the release sheet may be removed to expose the surface of the pressure sensitive adhesive layer 3. When an attaching apparatus is used to attach the dicing sheet 1 to the cut object, the apparatus may usually attach the dicing sheet 1 also to a ring frame. In this way, a stack structure can be obtained in which the cut object attached to the dicing sheet 1 is located in an opening part of the ring frame.

Subsequently, the above stack structure is placed on a dicing table, and the dicing process is performed from the surface of the cut object opposite to the side facing the pressure sensitive adhesive layer 3 to divide the cut object into individual pieces (dicing step). Through the above dicing step, a plurality of chips obtained by dividing the cut object into individual pieces may be disposed on the dicing sheet 1 in a state in which the chips are close to one another. In this state, when each chip is picked up, the chip may possibly come into contact with the adjacent chips, which may increase the possibility of troubles that the pickup is not appropriately performed and the quality issues occur, such as crack of the chip or chips. Accordingly, an expanding step for applying tensile force to the dicing sheet 1 may be performed after the dicing step. The applied tensile force to the dicing sheet 1 allows the dicing sheet 1 to elongate in a direction or directions on the main surface to increase the distance between the chips.

As previously described, the elongated length of the dicing sheet in the expanding step (expanding amount) recently tends to increase. Specifically, the expanding amount, which is ordinarily defined as a pull-down amount of the dicing sheet, may be increased from about 10 mm to about 20-40 mm in recent years. Even in such a case, the fracture of the base film 2 is less likely to occur when using the dicing sheet 1 comprising the base film 2 according to the present embodiment. Therefore, when the dicing sheet 1 comprising the base film 2 according to the present embodiment is used, troubles may not readily occur in the expanding step even with an increased expanding amount.

Moreover, the base film 2 according to the present embodiment is also excellent in the recoverability. The dicing sheet 1 comprising the base film 2 excellent in the recoverability may be heated at a temperature of about 50°C to 70°C for 30 seconds to several minutes after the expanding work, thereby to readily reduce the loosening amount.

The embodiments heretofore explained are described to facilitate understanding of the present invention and are not described to limit the present invention. Therefore, it is intended that the elements disclosed in the above embodiments include all design changes and equivalents to fall within the technical scope of the present invention.

[Examples]

Hereinafter, the present invention will be described further specifically with reference to examples, etc., but the scope of the present invention is not limited to these examples, etc.

<Example 1>

(Production of Base Film)

A resin composition ($\alpha$) for forming the cutting-fragment suppression layer (A) was obtained through melting and kneading 30 mass parts of cycloolefin copolymer (product name: TOPAS (registered trademark) 8007 available from POLYPLASTICS CO., LTD.) as the ring-containing resin (a1) and 70 mass parts of low-density polyethylene (product name: SUMIKATHENE (registered trademark) L705 available from Sumitomo Chemical Company, Limited) as the acyclic olefin-based resin (a2) at 210°C using a biaxial kneading machine (Labo-plastomill available from Toyo Seiki Seisaku-sho, LTD).

A resin composition ($\beta$1) for forming the resin-based unit layer (B1) was obtained through melting and kneading 60 mass parts of linear polyethylene (product name: EVOLUE (registered trademark) SP2540 available from Prime Polymer Co., Ltd., density: 924 kg/m$^3$), 10 mass parts of polypropylene (product name: Prime Polypro (registered trademark) F-744NP available from Prime Polymer Co., Ltd., density: 900 kg/m$^3$), and 30 mass parts of olefin-based elastomer (product name: TAFMER (registered trademark) DF640 available from Mitsui Chemicals, Inc., density: 864 kg/m$^3$) as the thermoplastic elastomer at 210°C using a biaxial kneading machine (Labo-plastomill available from Toyo Seiki Seisaku-sho, LTD).

The resin composition ($\alpha$) and resin composition ($\beta$1) thus obtained were subjected to coextrusion molding using a compact T-die extruder (Labo-plastomill available from Toyo Seiki Seisaku-sho, LTD). As a result, a base film of a two-layer structure having a thickness of 100 $\mu$m was obtained, comprising the expandable layer (B) formed of the resin-based unit layer (B1) having a thickness of 60 $\mu$m and the cutting-fragment suppression layer (A) having a thickness of 40 $\mu$m and laminated on one main surface of the resin-based unit layer (B1).

(Preparation of Pressure Sensitive Adhesive)

An energy ray curable-type pressure sensitive adhesive composition was obtained through mixing 100 mass parts of copolymer (Mw: 500, 000) provided by copolymerization of 95 mass parts of n-butyl acrylate and 5 mass parts of acrylic acid, 120 mass parts of urethane acrylate oligomer (Mw: 8,000), 5 mass parts of isocyanate-based curing agent (CORONATE L available from NIPPON POLYURETHANE INDUSTRY CO., LTD.), and 4 mass parts of photopolymerization initiator (IRGACURE 184 available from Ciba Specialty Chemicals Inc).

The energy ray curable-type pressure sensitive adhesive composition thus obtained was applied onto a release film treated with silicone (SP-PET3811(S) available from LINTEC Corporation) to have a film thickness after drying of 10 $\mu$m, and dried under 100°C for 1 minute to form a laminate comprising the pressure sensitive adhesive layer and the release film. This laminate was then attached to the main surface of the above base film at the side of the cutting-fragment suppression layer (A) to transfer the pressure sensitive adhesive layer of the laminate onto the base film, and a dicing sheet was thus obtained.

<Example 2>

A dicing sheet comprising a base film of a two-layer structure was manufactured in the same manner as in Example 1 except that the resin composition ($\beta$1) was obtained through melting and kneading 40 mass parts of the linear polyethylene, 30 mass parts of the polypropylene, and 30 mass parts of the olefin-based elastomer.

<Example 3>

A dicing sheet comprising a base film of a two-layer structure was manufactured in the same manner as in Example 1 except that the resin composition ($\beta$1) was obtained through melting and kneading 20 mass parts of the linear polyethylene, 50 mass parts of the polypropylene, and 30 mass parts of the olefin-based elastomer.

<Example 4>

A dicing sheet comprising a base film of a two-layer structure was manufactured in the same manner as in Example 2 except that polypropylene used to form the resin composition ($\beta$1) was another type of polypropylene (product name: Prime Polypro (registered trademark) F-704LB available from Prime Polymer Co., Ltd., density: 900 kg/m$^3$).

<Example 5>

A dicing sheet comprising a base film of a two-layer structure was manufactured in the same manner as in Example 2 except that polypropylene used to form the resin composition (β1) was another type of polypropylene (product name: Prime Polypro (registered trademark) F-704NP available from Prime Polymer Co., Ltd., density: 900 kg/m$^3$).

<Example 6>

A dicing sheet comprising a base film of a two-layer structure was manufactured in the same manner as in Example 1 except that the resin composition (β1) was obtained through melting and kneading 65 mass parts of the linear polyethylene, 30 mass parts of the polypropylene, and 5 mass parts of the olefin-based elastomer.

<Example 7>

A dicing sheet comprising a base film of a two-layer structure was manufactured in the same manner as in Example 1 except that the resin composition (β1) was obtained through melting and kneading 30 mass parts of the linear polyethylene, 30 mass parts of the polypropylene, and 40 mass parts of the olefin-based elastomer.

<Example 8>

A resin composition (α) for forming the cutting-fragment suppression layer (A) was obtained through melting and kneading 30 mass parts of cycloolefin copolymer (product name: TOPAS (registered trademark) 8007 available from POLYPLASTICS CO., LTD.) as the ring-containing resin (a1) and 70 mass parts of low-density polyethylene (product name: SUMIKATHENE (registered trademark) L705 available from Sumitomo Chemical Company, Limited) as the acyclic olefin-based resin (a2) at 210°C using a biaxial kneading machine (Labo-plastomill available from Toyo Seiki Seisaku-sho, LTD).
A resin composition (β1) for forming the resin-based unit layer (B1) was obtained through melting and kneading 40 mass parts of linear polyethylene (product name: EVOLUE (registered trademark) SP2540 available from Prime Polymer Co., Ltd., density: 924 kg/m$^3$), 30 mass parts of polypropylene (product name: Prime Polypro (registered trademark) F-744NP available from Prime Polymer Co., Ltd., density: 900 kg/m$^3$), and 30 mass parts of olefin-based elastomer (product name: TAFMER (registered trademark) DF640 available from Mitsui Chemicals, Inc., density: 864 kg/m$^3$) at 210°C using a biaxial kneading machine (Labo-plastomill available from Toyo Seiki Seisaku-sho, LTD).
A resin composition (β2) for forming the resin-based unit layer (B2) was obtained through melting and kneading 100 mass parts of ethylene-methacrylic acid copolymer (product name: NUCREL (registered trademark) N0903HC available from DUPONT-MITSUI POLYCHEMICALS CO., LTD.) as one type of the ethylene- (meth) acrylic acid series copolymer at 210°C using a biaxial kneading machine (Labo-plastomill available from Toyo Seiki Seisaku-sho, LTD).
The resin composition (α), resin composition (β1) and resin composition (β2) thus obtained were subjected to coextrusion molding using a compact T-die extruder (Labo-plastomill available from Toyo Seiki Seisaku-sho, LTD). As a result, a base film of a three-layer structure having a thickness of 100 μm was obtained, comprising the resin-based unit layer (B1) having a thickness of 30 μm, the cutting-fragment suppression layer (A) having a thickness of 40 μm and laminated on one main surface of the resin-based unit layer (B1), and the resin-based unit layer (B2) having a thickness of 30 μm and laminated so as to be in contact with the other main surface of the resin-based unit layer (B1), i.e. comprising the cutting-fragment suppression layer (A) having a thickness of 40 μm and the expandable layer (B) having a thickness of 60 μm and laminated on one main surface of the cutting-fragment suppression layer (A), the expandable layer (B) consisting of the resin-based unit layer (B1) having a thickness of 30 μm and the resin-based unit layer (B2) having a thickness of 30 μm.
Then, a dicing sheet was manufactured by performing the same operation as in Example 1.

<Example 9>

A dicing sheet comprising a base film of a three-layer structure was manufactured in the same manner as in Example 8 except that the resin composition (β1) was obtained through melting and kneading 20 mass parts of the linear polyethylene, 50 mass parts of the polypropylene, and 30 mass parts of the olefin-based elastomer.

<Example 10>

A dicing sheet comprising a base film of a three-layer structure was manufactured in the same manner as in Example 8 except that the resin composition (β1) had a composition of the resin composition (β1) prepared in Example 4.

<Example 11>

A dicing sheet comprising a base film of a three-layer structure was manufactured in the same manner as in Example 8 except that the resin composition (β1) had a composition of the resin composition (β1) prepared in Example 5.

<Comparative Example 1>

A dicing sheet comprising a base film of a two-layer structure was manufactured in the same manner as in Example 1 except that the resin composition (β1) was obtained through melting and kneading 60 mass parts of the linear polyethylene and 40 mass parts of the polypropylene.

<Comparative Example 2>

A dicing sheet comprising a base film of a two-layer structure was manufactured in the same manner as in Example 1 except that the resin composition (β1) was obtained through melting and kneading 60 mass parts of the linear polyethylene and 40 mass parts of the olefin-based elastomer.

<Comparative Example 3>

A dicing sheet comprising a base film of a two-layer structure was manufactured in the same manner as in Example 1 except that the resin composition (β1) used was obtained through melting and kneading 40 mass parts of low-density polyethylene (product name: SUMIKATHENE (registered trademark) L705 available from Sumitomo Chemical Company, Limited, density: 919 kg/m$^3$), 30 mass parts of polypropylene (product name: Prime Polypro (registered trademark) F-744NP available from Prime Polymer Co., Ltd., density: 900 kg/m$^3$), and 30 mass parts of olefin-based elastomer (product name: TAFMER (registered trademark) DF640 available from Mitsui Chemicals, Inc., density: 864 kg/m$^3$) at 210°C using a biaxial kneading machine (Labo-plastomill available from Toyo Seiki Seisaku-sho, LTD).

The conditions of the above examples and comparative examples are collectively listed in Table 1. The numerical value in the column of composition means the compounding mass parts of each component, and the numerical value in the column of structure means the thickness (unit: μm) of each layer.

In the table, the polypropylene used in Examples 1 to 3 and 6 to 9 and Comparative Examples 1 and 3 is denoted by "Polypropylene 1, " the polypropylene used in Examples 4 and 10 is denoted by "Polypropylene 2," and the polypropylene used in Examples 5 and 11 is denoted by "Polypropylene 3."

[Table 1]

| | | Example 1 | Example 2 | Example 3 | Example 4 | Example 5 | Example 6 | Example 7 | Example 8 | Example 9 | Example 10 | Example 11 | Comparative Example 1 | Comparative Example 2 | comparative Example 3 |
|---|---|---|---|---|---|---|---|---|---|---|---|---|---|---|---|
| cutting-fragment suppression layer (A) | resin | 30 | 30 | 30 | 30 | 30 | 30 | 30 | 30 | 30 | 30 | 30 | 30 | 30 | 30 |
| | Ring-containing(a1)Acyclic olofin-based resin (a2) | 70 | 70 | 70 | 70 | 70 | 70 | 70 | 70 | 70 | 70 | 70 | 70 | 70 | 70 |
| Rosin-based unit layer (B1) | Linear polyethylene | 60 | 40 | 20 | 40 | 40 | 65 | 30 | 40 | 20 | 40 | 40 | 60 | 60 | - |
| | Polypropylene 1 | 10 | 30 | 50 | - | - | 30 | 30 | 30 | 50 | - | - | 40 | - | 30 |
| | Polypropylene 2 | - | - | - | 30 | - | - | - | - | - | 30 | - | - | - | - |
| | Polypropylene 3 | - | - | - | - | 30 | - | - | - | - | - | 30 | - | - | - |
| | Olefin-based elastomer | 30 | 30 | 30 | 30 | 30 | 5 | 40 | 30 | 30 | 30 | 30 | - | 40 | 30 |
| | Low-density polyethylene | - | - | - | - | - | - | - | - | - | - | - | - | - | 40 |
| Resin-based unit layer (B2) | Ethylene-methacrylic acid copolymer | - | - | - | - | - | - | - | 100 | 100 | 100 | 100 | - | - | - |

EP 3 125 276 A1

(continued)

| | | Example 1 | Example 2 | Example 3 | Example 4 | Example 5 | Example 6 | Example 7 | Example 8 | Example 9 | Example 10 | Example 11 | Comparative Example 1 | Comparative Example 2 | comparative Example 3 |
|---|---|---|---|---|---|---|---|---|---|---|---|---|---|---|---|
| | Number of lamination | 2 | 2 | 2 | 2 | 2 | 2 | 2 | 3 | 3 | 3 | 3 | 2 | 2 | 2 |
| Layer structure | Thickness of cutting-fragment suppression layer (A) | 40 | 40 | 40 | 40 | 40 | 40 | 40 | 40 | 40 | 40 | 40 | 40 | 40 | 40 |
| | Thickness of resin-based unit layer (B1) | 60 | 60 | 60 | 60 | 60 | 60 | 60 | 30 | 30 | 30 | 30 | 60 | 60 | 60 |
| | Thickness of resin-based unit layer (B2) | - | - | - | - | - | - | - | 30 | 30 | 30 | 30 | - | - | - |
| Evaluation of cutting fragments | | A | A | A | A | A | A | A | A | A | A | A | A | A | A |
| Evaluation of expandability | Dicing condition 1 | A | A | A | A | A | A | A | A | A | A | A | B | A | C |
| | Dicing condition 2 | B | A | A | A | A | A | A | A | B | A | A | A | C | c |
| Evaluation of recoverability | | B | B | B | B | B | B | B | A | A | A | A | C | C | |
| Tensile elastic modulus ratio | (A)/(B1) | 3.7 | 2.5 | 1.8 | 2.6 | 2.4 | 2.6 | 2.6 | 2.5 | 1.8 | 2.6 | 2.6 | 2.1 | 7.0 | 2.5 |
| | (B1)/(B2) | - | - | - | - | - | - | - | 2.0 | 2.9 | 1.9 | 1.8 | - | - | - |

<Exemplary Test 1> (Observation of Cutting Fragments)

After attaching the pressure sensitive adhesive layer of the dicing sheet manufactured in each of the examples and comparative examples to a BGA-type package module and then setting them on a dicing apparatus (DFD-651 available from DISCO Corporation), dicing was performed under the condition as below:

- work size: 6-inch diameter, 350 $\mu$m thickness;
- dicing blade: Z1110LS3 available from DISCO Corporation;
- blade rotating speed: 30,000 rpm;
- dicing speed: 10 mm/sec;
- cutting depth: cutting into the base film with a depth of 20 $\mu$m from the interface with the pressure sensitive adhesive layer; and
- dicing size: 10 mm$\times$10 mm.

Thereafter, the side of the base film was irradiated with ultraviolet rays (160 mJ/cm$^2$) and the cut chips were removed. Among lengthwise and breadthwise dicing lines, one lengthwise line and one breadthwise line located near the respective centers were subjected to a test in which the number of filament-like cutting fragments occurring on each line was counted using a digital microscope (VHX-100 available from KEYENCE CORPORATION, magnification: $\times$100). With regard to the counted number of cutting fragments, evaluation was conducted in accordance with the criteria below.

A: the number of cutting fragments was 0 or more and 10 or less
B: the number of cutting fragments was 11 or more and 15 or less
C: the number of cutting fragments was 16 or more

A and B were determined to be good, and C was determined to be bad. Results are listed in Table 1.

<Exemplary Test 2> (Evaluation of Expandability)

After attaching a 6-inch silicon wafer to the pressure sensitive adhesive layer of the dicing sheet manufactured in each of the examples and comparative examples, the dicing sheet was mounted on a flat frame and set on a dicing apparatus (DFD-651 available from DISCO Corporation), and dicing was performed under each of the two conditions as below:

«Dicing Condition 1»

- work size: 6-inch diameter, 350 $\mu$m thickness;
- dicing blade: 27HECC available from DISCO Corporation;
- blade rotating speed: 30,000 rpm;
- dicing speed: 10 mm/sec;
- cutting depth: cutting into the base film with a depth of 20 $\mu$m from the interface with the pressure sensitive adhesive layer; and
- dicing size: 10 mm$\times$10 mm

«Dicing Condition 2»

- work size: 6-inch diameter, 350 $\mu$m thickness;
- dicing blade: 27HECC available from DISCO Corporation;
- blade rotating speed: 30,000 rpm;
- dicing speed: 100 mm/sec;
- cutting depth: cutting into the base film with a depth of 40 $\mu$m from the interface with the pressure sensitive adhesive layer; and
- dicing size: 10 mm$\times$10 mm.

For each of the dicing sheets for which the dicing was performed under the above two conditions, an expanding step was performed by pulling down the dicing sheet, in a state in which the chips were attached to one main surface of the dicing sheet, by 10 mm at a speed of 300 mm/min (Expanding Condition 1) or by 30 mm at a speed of 300 mm/min (Expanding Condition 2) using an expanding jig (Die Bonder available from NEC Machinery Corporation, product name: CSP-100VX). With regard to the dicing sheet after the expanding step, the presence or absence of the occurrence of fracture was observed. During the observation, evaluation was conducted in accordance with the criteria below.
A: fracture was not confirmed under both of Expanding Conditions 1 and 2
B: fracture was confirmed under either of Expanding Conditions 1 and 2
C: fracture was confirmed under both of Expanding Conditions 1 and 2

A and B were determined to be good, and C was determined to be bad. Results are listed in Table 1.

<Exemplary Test 3> (Evaluation of recoverability)

To each dicing sheet after performing the dicing under Dicing Condition 1 and performing the expanding step under Expanding Condition 1 in Exemplary Test 2, warm air of a temperature of 50°C to 70°C was supplied for 1 minute using a dryer. Thereafter, the loosening amount of the dicing sheet (the displacement distance in the vertical direction of the bottom surface of the dicing sheet with reference to a portion of the dicing sheet attached to the ring frame) was measured. With regard to the measured loosening amount, evaluation was conducted in accordance with the criteria below.

A: loosening amount was 1.5 mm or less
B: loosening amount was more than 1.5 mm and 3 mm or less
C: loosening amount was more than 3 mm

A and B were determined to be good, and C was determined to be bad. Results are listed in Table 1.
As apparent from Table 1, the dicing sheet manufactured in each of the examples is found to exhibit the cutting-fragment suppression effect, the fracture is less likely to occur after the expanding step, and the recoverability is good.

<Exemplary Test 4> (Measurement of Tensile Elastic Modulus Ratio)

Each resin composition prepared for manufacturing the base films according to the examples and comparative examples was solely subjected to coextrusion molding using a compact T-die extruder (Labo-plastomill available from Toyo Seiki Seisaku-sho, LTD). Through this operation, a resin film of a single layer structure having a thickness of 100 $\mu$m was obtained.
The resin film thus obtained was cut into a test piece of 15 mm×140 mm, and the tensile elastic modulus at 23°C was measured in accordance with JIS K7161-1:2014 and JIS K7127:1999. Specifically, the above test piece was set to have a distance between chucks of 100 mm using a tensile tester (Autograph AG-IS 500N available from Shimadzu Corporation), and a tensile test was then performed at a speed of 200 mm/min to measure the tensile elastic modulus (MPa). The measurement of the tensile elastic modulus was performed only in the extrusion direction (MD) when molding the resin film.
For each of the examples and comparative examples, when the tensile elastic modulus of the cutting-fragment suppression layer (A) was E1 and the tensile elastic modulus of the resin-based unit layer (B1) was E2, the tensile elastic modulus ratio $\varepsilon$ for the combination of the cutting-fragment suppression layer (A) and the resin-based unit layer (B1) was calculated from Equation (I) or (II) below:

$$\text{tensile elastic modulus ratio } \varepsilon = E1/E2 \text{ when } E1 \geqq E2 \text{ ... (I)}$$

$$\text{tensile elastic modulus ratio } \varepsilon = E2/E1 \text{ when } E1 < E2 \text{ ... (II).}$$

As a result, a value obtained from the above Equation (I) through dividing the tensile elastic modulus of the cutting-fragment suppression layer (A) by the tensile elastic modulus of the resin-based unit layer (B1) was employed as the tensile elastic modulus ratio because of $E1 \geqq E2$. The tensile elastic modulus ratios thus obtained are listed in Table 1.
For each of Examples 8 to 11 in which a base film of a three-layer structure was manufactured, when the tensile elastic modulus of the resin-based unit layer (B1) was E1 and the tensile elastic modulus of the resin-based unit layer (B2) was E2, the tensile elastic modulus ratio $\varepsilon$ for the combination of the resin-based unit layer (B1) and the resin-based unit layer (B2) was also calculated from the above Equation (I) or (II). As a result, a value obtained from the above Equation (I) through dividing the tensile elastic modulus of the resin-based unit layer (B1) by the tensile elastic modulus of the resin-based unit layer (B2) was employed as the tensile elastic modulus ratio ε because of E1≥E2. The tensile elastic modulus ratios thus obtained are listed in Table 1.

[Industrial Applicability]

The base film for a dicing sheet and the dicing sheet according to the present invention can be suitably used for dicing of semiconductor wafers, various types of packages, etc.

[Description of Reference Numerals]

1 Dicing sheet
2 Base film

(A) Cutting-fragment suppression layer
(B) Expandable layer

(B1) Resin-based unit layer
(B2) Resin-based unit layer

3 Pressure sensitive adhesive layer

**Claims**

1. A base film for a dicing sheet, the base film comprising a cutting-fragment suppression layer (A) and an expandable layer (B) laminated on one main surface of the cutting-fragment suppression layer (A), the expandable layer (B) comprising at least one resin-based unit layer,
   the at least one resin-based unit layer including a resin-based unit layer (B1) that is disposed nearest to the cutting-fragment suppression layer (A), the resin-based unit layer (B1) comprising a linear polyethylene, polypropylene, and thermoplastic elastomer,
   the cutting-fragment suppression layer (A) comprising a ring-containing resin (a1) that is a thermoplastic resin having at least one type of an aromatic series-based ring and an aliphatic series-based ring and an acyclic olefin-based resin (a2) that is an olefin-based thermoplastic resin other than the ring-containing resin (a1).

2. The base film as recited in claim 1, wherein, when any two layers in all combinations of two adjacent layers among layers that constitute the base film have a tensile elastic modulus E1 and a tensile elastic modulus E2, a tensile elastic modulus ratio ε obtained from Equation (I) or (II) below is 1.0 to 3.0:

$$\text{tensile elastic modulus ratio } \varepsilon = E1/E2 \text{ when } E1 \geq E2 \ \dots \ (I)$$

$$\text{tensile elastic modulus ratio } \varepsilon = E2/E1 \text{ when } E1 < E2 \ \dots \ (II).$$

3. The base film as recited in claim 1 or 2, wherein the resin-based unit layer (B1) contains 5 mass% or more and 70 mass% or less of the polypropylene.

4. The base film as recited in any one of claims 1 to 3, wherein the resin-based unit layer (B1) contains 1 mass% or more and 60 mass% or less of the thermoplastic elastomer.

5. The base film as recited in any one of claims 1 to 4, wherein the thermoplastic elastomer contained in the resin-based unit layer (B1) is olefin-based elastomer.

6. The base film as recited in any one of claims 1 to 5, wherein the expandable layer (B) has a thickness of which a ratio to a thickness of the base film is 30% or more and 80% or less, and a ratio of a thickness of the resin-based unit layer (B1) to the thickness of the expandable layer (B) is 30% or more.

7. The base film as recited in any one of claims 1 to 6, wherein the resin-based unit layer (B1) contains 10 mass% or more and 90 mass% or less of the linear polyethylene.

8. The base film as recited in any one of claims 1 to 7, wherein the expandable layer (B) comprises a plurality of the resin-based unit layers,
wherein the resin-based layers include a resin-based unit layer (B2) that is disposed farthest from the cutting-fragment suppression layer (A) and is different from the resin-based unit layer (B1),
wherein the resin-based unit layer (B2) comprises a layer that contains an ethylene- (meth) acrylic acid series copolymer.

9. A dicing sheet comprising: the base film as recited in any one of claims 1 to 8; and a pressure sensitive adhesive layer disposed on the cutting-fragment suppression layer (A) of the base film.

10. A method of manufacturing the base film as recited in any one of claims 1 to 7,
the method comprising a coextrusion molding step of obtaining a laminate of the cutting-fragment suppression layer (A) and the expandable layer (B) by coextrusion molding of two or more types of resin compositions that include a resin composition ($\alpha$) for forming the cutting-fragment suppression layer (A) and a resin composition ($\beta1$) for forming the resin-based unit layer (B1).

11. A method of manufacturing the base film as recited in claim 8,
the method comprising a coextrusion molding step of obtaining a laminate of the cutting-fragment suppression layer (A) and the expandable layer (B) by coextrusion molding of three or more types of resin compositions that include a resin composition ($\alpha$) for forming the cutting-fragment suppression layer (A), a resin composition ($\beta1$) for forming the resin-based unit layer (B1), and a resin composition ($\beta2$) for forming the resin-based unit layer (B2).

Fig. 1

## INTERNATIONAL SEARCH REPORT

International application No.

PCT/JP2015/057206

### A. CLASSIFICATION OF SUBJECT MATTER
*H01L21/301*(2006.01)i, *B32B7/02*(2006.01)i, *B32B27/32*(2006.01)i, *C09J7/02* (2006.01)i, *C09J201/00*(2006.01)i

According to International Patent Classification (IPC) or to both national classification and IPC

### B. FIELDS SEARCHED

Minimum documentation searched (classification system followed by classification symbols)
H01L21/301, B32B7/02, B32B27/32, C09J7/02, C09J201/00

Documentation searched other than minimum documentation to the extent that such documents are included in the fields searched
Jitsuyo Shinan Koho        1922-1996    Jitsuyo Shinan Toroku Koho    1996-2015
Kokai Jitsuyo Shinan Koho  1971-2015    Toroku Jitsuyo Shinan Koho    1994-2015

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | JP 2012-036374 A (Mitsui Chemicals, Inc.),<br>23 February 2012 (23.02.2012),<br>paragraphs [0040] to [0061], [0098] to [0100];<br>fig. 3<br>(Family: none) | 1,3-11<br>2 |
| Y<br>A | JP 2009-164181 A (Gunze Ltd.),<br>23 July 2009 (23.07.2009),<br>paragraphs [0025] to [0038]<br>(Family: none) | 1,3-11<br>2 |
| A | JP 2012-119395 A (The Furukawa Electric Co., Ltd.),<br>21 June 2012 (21.06.2012),<br>claims; fig. 3<br>(Family: none) | 1-11 |

☒ Further documents are listed in the continuation of Box C.          ☐ See patent family annex.

| | |
|---|---|
| *    Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    08 April 2015 (08.04.15) | Date of mailing of the international search report<br>    21 April 2015 (21.04.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br>Telephone No. |

Form PCT/ISA/210 (second sheet) (July 2009)

**INTERNATIONAL SEARCH REPORT**

| International application No. |
| --- |
| PCT/JP2015/057206 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 11-043656 A  (Lintec Corp.),<br>16 February 1999 (16.02.1999),<br>claims; fig. 3<br>& EP 895421 A2 | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5211234 A